# EUROPEAN PATENT SPECIFICATION

(11) **EP 1 846 967 B1**
(45) Date of publication and mention of the grant of the patent: **22.12.2010**
(21) Application number: 06705544.2
(22) Date of filing: 24.01.2006
(51) Int. Cl.: H01M 4/62, H01M 4/26, H01M 10/30, H01M 10/24, H01M 4/24

(54) **A ZINC NEGATIVE ELECTRODE FOR ZINC-NICKEL SECONDARY BATTERIES, A PREPARATION METHOD THEREOF, AND A ZINC-NICKEL SECONDARY BATTERY CONTAINING THE SAME**
ZINK-NEGATIVELEKTRODE FÜR ZINK-NICKEL-SEKUNDÄRBATTERIEN, HERSTELLUNGSVERFAHREN DAFÜR UND DIESE ENTHALTENDE ZINK-NICKELSEKUNDÄRBATTERIE
ELECTRODE NEGATIVE DE ZINC DESTINEE A DES BATTERIES SECONDAIRES ZINC-NICKEL, PROCEDE DE PREPARATION CORRESPONDANT, ET BATTERIE SECONDAIRE ZINC-NICKEL LA CONTENANT

(30) Priority: 28.01.2005 CN 200510002899
(43) Date of publication of application: 24.10.2007
(73) Proprietor: Byd Company Limited, Shenzhen City, Guangdong 518119 (CN)
(72) Inventor: ZHU, Zhijian Intellectual Property Department BYD COMPANY Limited, Guangdong 518119 (CN)
(74) Representative: Neyret, Daniel Jean Marie
(86) International application number: PCT/CN2006/000123
(87) International publication number: WO 2006/079280

(56) References cited:
- WO-A-92/20111
- WO-A-2006/032208
- JP-A- 58 032 359
- JP-A- 58 032 362
- JP-A- 59 033 756
- JP-A- 60 264 049
- JP-B- 48 026 488
- US-A- 4 407 915

## Description

### [Field of Invention]

This invention relates to a zinc negative electrode for zinc-nickel secondary batteries, a preparation method thereof, and a zinc-nickel secondary battery containing the same.

### [Background]

Close to the end of charging and during over-charging, oxygen is continuously released from the nickel positive electrode of a zinc-nickel secondary battery. Part of the oxygen is absorbed by reacting with the zinc metal at the negative electrode, and other oxygen is absorbed by the electrochemical reduction reaction at the surface of the negative electrode. The process in which oxygen is absorbed is referred to as oxygen recombination. In a zinc-nickel secondary battery, the oxygen recombination ability of the zinc negative electrode is relatively poor. Therefore, at the end of the charging process and during overcharging, especially when charging with a strong electrical current, the oxygen generated by the nickel electrode cannot be adequately reduced at the zinc negative electrode. When the rate of oxygen generation of the positive electrode exceeds the rate of oxygen absorption of the negative electrode, the internal pressure of the battery will gradually increase due to oxygen accumulation. When the increased pressure forces the battery's safety valve to open, the internal gas will leak out accompanied with the electrolyte.

In the application of cordless phones, when a cordless phone is not in use, a user would generally place the phone over its charger and leave the phone constantly charging. Therefore, the battery pack in a cordless phone must be strongly overcharging-proof. Otherwise, when the battery is over-charged, the internal pressure of the battery would gradually increase and eventually cause electrolyte leakage, eroding the electrical the circuit board and damaging the telephone.

There are two approaches to reduce the battery internal pressure. One is to increase the over-potential of the oxygen evolution at the nickel electrode during charging, therefore reducing the amount of oxygen released from the positive electrode during overcharging. The other one is to strengthen the oxygen recombination ability of the zinc negative electrode to reduce the oxygen accumulated in the battery.

During preparing a zinc negative electrode in the prior art, as disclosed in CN1501530A, to improve the electrical conductivity, electrically conductive additives such as carbon black and graphite can be added to the negative electrode material. To improve the oxygen recombination ability of a zinc negative electrode, hydrophobic binding agents such as polytetrafluoroethylene (PTFE) can be used to form a hydrophobic matrix which will further form some but not enough hydrophobic pores as pathway. These pathways will enable oxygen to enter the electrode to be recombined.

However, this is insufficient to completely control the internal pressure increase during overcharging. The reason is that both the hydrophilic zinc oxide and carbon black in the zinc negative electrode are excellent liquid absorbent, especially carbon black with a large pore density. During the traditional process of fabricating a zinc negative electrode, an aqueous system is used to fabricate the negative electrode. When zinc oxide, carbon black, metal oxide additive and a hydrophilic binding agent are mixed at stirring to form a slurry, the apertures of the carbon black firstly absorb the hydrophilic binding agent. Therefore, when the electrolyte is injected into the battery, the apertures of the carbon black are filled with electrolyte. The electrolyte in the apertures blocks the path for the oxygen to further enter the electrode. That is, the apertures of the carbon black are not utilized to facilitate oxygen recombination. Instead, they hinder the oxygen recombination.

Currently, to improve oxygen recombination at the zinc negative electrode, a stacked split negative electrode assembly design as described in U.S. Patent 5,460,899 is widely used. In that design of split negative electrode assembly, a porous hydrophobic membrane is used to separate two zinc electrode half-plates. An integrated zinc negative electrode comprises two zinc electrode half-plates and a porous hydrophobic membrane between them. The oxygen generated in the process of positive electrode charging can reach the inner side of a zinc electrode half-plate through the porous hydrophobic membrane. The oxygen can then be recombined at the zinc negative electrode. It is apparent that due to the existence of the porous hydrophobic membrane, without further alteration, the surface area of the zinc electrode has doubled.

However, there are many disadvantages associated with this method. First, the use of two zinc electrode half-plates doubles the quantity of electrode current collector used, increasing the cost of raw materials. Second, the process for fabricating an integrated zinc negative electrode plate is complex, increasing labor costs. Thirdly, such design of split negative electrode assembly is only suitable for a laminated battery structure-generally for rectangular batteries, but not suitable for batteries of the winding type-generally cylindrical batteries.

WO2006/032208 discloses a zinc negative electrode suitable for a zinc-nickel secondary battery comprising a Pb, Sn or Pb-Sn plated copper net which is coated with a paste of active mass.

WO92/20111A discloses a zinc negative electrode sutiable for a zinc-nickel secondary battery which comprises ZnO and carboxy methyl cellulose, wherein an O₂ reduction electrode comprising a mixture of SHAWINIGAN BLACK is placed on top of the zinc electrode which can have electronic and ionic contact to the O₂ reduction electrode to enhance the oxygen recombination rate at the anode.

US 4407915 A and JP 48 026488B also disclose a zinc electrode comprising hydrophobic carbon black or hydroprobic graphite.

However, the method to integrate the hydrophobic materials into the active mass of the zinc electrode and the amount of every component are not disclosed in any one of the above documents.

In view of both manufacturing cost and product diversity, it is required to develop a new zinc negative electrode having well improved oxygen recombination ability.

### [Summary of the Invention]

By strengthening the oxygen recombination ability of zinc negative electrodes, this invention is made to reduce oxygen accumulation inside a battery, solving the problem of the over high internal pressure when a zinc-nickel secondary battery is charged.

An object of this invention is to provide a negative electrode for zinc-nickel secondary batteries and a preparation method thereof, by adding hydrophobic conductive porous granules to the negative electrode material to improve the oxygen recombination ability of the negative electrode.

Another object of this invention is to provide a zinc-nickel secondary battery containing said zinc negative electrode. Since the zinc negative electrode has enhanced oxygen recombination ability, the zinc-nickel secondary battery according to this invention has a low internal pressure.

In this invention, hydrophobic porous granules fabricated by using hydrophobic materials and conductive porous granules are evenly distributed on the surface of the zinc negative electrode and within the zinc negative electrode. These hydrophobic porous granules not only function as electrical conductors, but also provide pathways for the transmission and recombination of oxygen. Therefore the goal of making the oxygen reaching the surface of the zinc negative electrode and in the zinc negative electrode for recombination is achieved.

Therefore, the first aspect of this invention is to provide a zinc negative electrode in zinc-nickel secondary batteries comprising a current collector and negative electrode materials coated on the current collector, wherein the negative electrode materials contain zinc oxide, a binding agent, and hydrophobic conductive porous granules, said hydrophobic conductive porous granules are carbon black on which hydrophobic materials are absorbed, and said hydrophobic conductive porous granules are evenly distributed in the negative electrode materials; and wherein based on the total weight of the negative electrode materials, the content of hydrophobic materials absorbed on carbon black is 0.02∼1 %; wherein the binding agent is a mixture of a hydrophobic binding agent and a hydrophilic binding agent.

Based on the total weight of the negative electrode materials, the contents of the ingredients of said negative electrode materials may be as follows:
zinc oxide: 86∼95 %;
the binding agent: 1∼8 %;
carbon black: 0.2∼5 %.

The hydrophobic material for said hydrophobic conductive porous granules is preferred to be polytetrafluoroethylene and/or styrene-butadiene rubber.

Preferably, said carbon black has a total pore volume of 0.45∼0.80 cm³/g, a BET specific surface area of 200∼1600 m²/g, and an average granular diameter of 25∼50 µm.

Said current collector can be any available current collector for a zinc negative electrode generally known in this field, which is not specially limited in this invention. For example, the current collector can be a mesh copper belt. The surface of said mesh copper belt can be coated with a layer of stannum or stannum alloy. Said negative electrode material is evenly coated on both sides of the mesh copper belt current collector.

Said negative electrode material can also contain metal oxide additives. Said metal oxide additive can be selected from the group consisting of cadmium oxide, bismuth oxide, indium oxide, lead oxide, stannum dioxide and the mixture thereof. Based on the total weight of the negative electrode materials, the content of the metal oxide additive is 0∼15 %, and preferably 1∼12 %. The function of the metal oxide additive is to prevent a premature passivation of the negative electrode caused by polarization when the battery is discharged. In the process of initial charging, the metal oxide additives are converted to the metal form before ZnO and form a conductive network. However, the metal oxide additives do not participate in the reaction during a discharge. Thus the metal conductive matrix is preserved, the polarization of the negative electrode is diminished, and the passivation is delayed, enabling the batteries to discharge more electricity.

Said hydrophobic binding agent and hydrophilic binding agent in the negative electrode material can be any binding agent generally known in this field, which is not specially limited in this invention. There is no limitation with respect to the weight ratio of the hydrophilic binding agent and the hydrophobic binding agent. The ratio can be determined based on needs. For example, the weight ratio of the hydrophilic binding agent and the hydrophobic binding agent can be (0.3∼1):1. Said hydrophobic binding agent can be, for example, polytetrafluoroethylene and/or styrene-butadiene rubber. Said hydrophilic binding agent can be selected from the group consisting of hydroxypropyl methyl cellulose, sodium carboxy methyl cellulose, hydroxyethyl cellulose, polyvinyl alcohol, and their mixture.

The second aspect of this invention is to provides a method for preparing a zinc negative electrode in zinc-nickel secondary batteries, comprising the following steps:
(1) dispersing 0.2∼5 weight parts of carbon black in 25∼35 weight parts of water;
(2) adding an aqueous suspension containing 0.02∼1 weight part of hydrophobic materials into the dispersion prepared in step (1) at stirring to make the hydrophobic materials completely absorbed by the carbon black, to obtain a semi-finished product of the hydrophobic conductive porous granules;
(3) adding 86∼95 weight parts of zinc oxide, and optionally 1∼12 weight parts of metal oxide additive into the semi-finished product of the hydrophobic conductive porous granules prepared in step (2), adding hydrophilic binding agent solution with a dry weight of 0.3∼3 weight parts thereto at stirring, and adding hydrophobic binding agent solution with a dry weight of 0.7∼5 weight parts thereto at stirring to obtain a uniform zinc negative electrode slurry; and
(4) coating the zinc negative electrode slurry on the two sides of the electrode current collector by using a slurry stretching equipment, drying, and press cutting to obtain the zinc negative electrode with desired size,
providing that the total weight of zinc oxide, the binding agent, carbon black, and hydrophobic materials absorbed on carbon black, and optionally metal oxide additive, is 100 weight parts.

In step (2), the concentration of the aqueous suspension of the hydrophobic material does not great affect on the absorption of the hydrophobic material by the carbon black. Therefore this invention has no special limitation with respect to the concentration. The concentration can be adjusted according to the needs of operation. For example, it can be 10∼80 weight %.

In step (3), there is no special limitation with respect to the concentration of the hydrophilic binding agent solution and the hydrophobic binding agent solution. The concentration can be widely adjusted according to the requirements for viscosity and operability of the stretched slurry. For example, the concentration of said hydrophilic binding agent solution can be 0.5∼4 weight %, and the concentration of said hydrophobic binding agent solution can be 10∼80 weight %.

In the method according to the second aspect of this invention, the raw material used is the same as defined in the first aspect. It is not repeated herein.

According to the third aspect of this invention, a zinc-nickel secondary battery is provided, wherein the battery comprises the zinc negative electrode provided in this invention as mentioned above.

Specifically, a zinc-nickel secondary battery of this invention contains a nickel positive electrode, a separator, a zinc negative electrode and an alkaline electrolyte, wherein the zinc negative electrode comprise a current collector and negative electrode materials coated on the current collector, wherein the negative electrode materials contain zinc oxide, a binding agent, and hydrophobic conductive porous granules, said hydrophobic conductive porous granules are carbon black on which hydrophobic materials are absorbed, and said hydrophobic conductive porous granules are evenly distributed in the negative electrode materials; wherein based on the total weight of the negative electrode materials, the content of hydrophobic materials absorbed on carbon black is 0.02∼1 %; wherein the binding agent is a mixture of a hydrophobic binding agent and a hydrophilic binding agent.

The zinc negative electrode of said zinc-nickel secondary battery fabricated according to the third aspect of this invention is the same as defined in the first aspect. It is not repeated herein.

Since the improvement of this invention only relates to the zinc negative electrode of a zinc-nickel secondary battery, there is no special limitation with respect to said positive electrode, separator, or the alkaline electrolyte. All types of nickel positive electrodes, separators, and alkaline electrolytes used in zinc-nickel secondary batteries can be used. Based on available technical teachings, those skilled in the art can easily select and fabricate said nickel positive electrode, separator and alkaline electrolyte of said zinc-nickel battery of this invention. Those skilled can also fabricate a zinc-nickel secondary battery of this invention using said nickel positive electrode, zinc negative electrode, separator and alkaline electrolyte.

For example, said nickel positive electrode can be a nickel electrode fabricated as follows: mixing and stirring spherical nickel hydroxide, cobaltous oxide, conductive carbon black with suspension of PTFE, aqueous solution of hydroxypropyl methyl cellulose and deionized water to create a slurry. The nickel foam coated with the slurry is welded with conduction tabs, dried, rolled and cut to obtain positive electrodes.

Said separator can be a composite separator prepared by welding or binding a modified polypropylene felt, vinylon felt, or nylon felt and a wettable polyolefin micro-pored membrane.

Said alkaline electrolyte can be an aqueous solution of KOH, NaOH, and/or LiOH.

The advantageous effect of this invention is as follows:

The zinc negative electrodes of this invention contain hydrophobic conductive porous granules. When a zinc negative electrode is used in a zinc-nickel secondary battery having a negative electrode made of zinc, the hydrophobic conductive porous granules provide transmission pathways for oxygen, enabling oxygen to be reduced at the surface of the negative electrode as well as within the electrode, because the granules have porous pathways of small size, and a large real surface area, and are evenly distributed inside and on the surface of the zinc negative electrode. The granules significantly enhance the efficiency of oxygen recombination at the zinc negative electrode, reduce the internal pressure of the battery, and significantly improve the overcharging-proof property of a zinc-nickel battery. When a battery pack of a cordless phone is fabricated of zinc-nickel secondary batteries of this invention, it can be resistant to overcharging over a long period of time, without an electrolyte leakage or the danger of electrical circuit board erosion and damages to the phone. In addition, a battery pack only needs two battery units. Compared with the commercially available three-battery packs for cordless phones, the costs are reduced by 1/3.

### [Detailed Description of the Embodiments]

The following examples further illustrate this invention. However, they should not be understood as limitations to the scope of this invention.

### Example 1

0.2g of carbon black (product of Carbon Black Institute of China Rubber Group, with a total pore volume being 0.5cm ³/g, a BET specific surface area being 300m²/g, and an average granular diameter being 25µm) was added in a beaker, and 25g of deionized water was added thereto. The beaker was placed on a stir mixer to mix the materials in the beaker. During stirring, 0.03g of polytetrafluoroethylene (PTFE) aqueous suspension with a concentration of 60% was added to the beaker. After stirring for ten minutes, the turbidity of the supernate in the beaker was observed. When the supernate was completely clear, it was shown that the hydrophobic polytetrafluoroethylene had been completely absorbed by the carbon black granules. At this stage, the semi-finished product of the hydrophobic conductive porous granules was fabricated. If the supernate in the beaker was still not completely clear, the same process was repeated until the supernate became completely clear.

86g of zinc oxide, 5g of cadmium oxide, and 5g of bismuth oxide were mixed well, and the mixture was added into above mentioned beaker. 10g of a hydroxypropyl methyl cellulose aqueous solution with a concentration of 3% and 12g of a polyvinyl alcohol aqueous solution with a concentration of 4% were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

92g of spherical nickel hydroxide, 7g of cobaltous oxide, 11g of carbon black, and a binding agent solution consisting of 4g of polytetrafluoroethylene, 0.2g of hydroxypropyl methyl cellulose and 40g of deionized water were mixed at stirring to form a slurry. The slurry was coated on a piece of nickel foam welded with a current guiding tape. The nickel foam was dried, rolling pressed and cut to fabricate nickel electrodes with a length of 70mm and a width of 19mm.

Said zinc negative electrode and nickel positive electrode were separated by a composite separator formed by welding or binding a modified polypropylene felt to a wettable polyolefine micropore membrane. The negative electrode, the composite separator, and the positive electrode were well wound using a winding machine to form an electrode core. The electrode core was placed in a 2/3AA type battery steel can. A positive electrode tab was welded to the inside bottom of the can and a negative electrode tab was welded to a header with a gasket used to seal the battery. Electrolyte containing 25% of KOH and 1.5% of LiOH was injected, and then the header was placed on the can opening and crimped to seal the battery to obtain said 2/3AA type cylindrical zinc nickel battery.

### Example 2

0.2g of carbon black (product of Carbon Black Institute of China Rubber Group, with a total pore volume being 0.55cm³/g, a BET specific surface area being 400m²/g, and an average granular diameter being 30µm) was added in a beaker, and 25g of deionized water was added thereto. The beaker was placed on a stir mixer to mix the materials in the beaker. During stirring, 0.1g of polytetrafluoroethylene (PTFE) aqueous suspension with a concentration of 60% was added into said beaker. After stirring for ten minutes, the turbidity of the supernate in the beaker is observed. When the supernate was completely clear, it was shown that the hydrophobic polytetrafluoroethylene had been completely absorbed by the carbon black granules. At this stage, the semi-finished product of the hydrophobic conductive porous granules was fabricated. If the supernate in the beaker was still not completely clear, the same process was repeated until the supernate became completely clear.

87g of zinc oxide, 4g of indium oxide, and 6g of bismuth oxide were mixed well, and the mixture was added into above mentioned beaker. 10g of a hydroxyethyl cellulose aqueous solution with a concentration of 3% and 12g of a polyvinyl alcohol aqueous solution with a concentration of 4 % were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### Example 3

1.0g of carbon black (product of KETJEN BLACK INTERNATIONAL COMPANY, with a total pore volume being 0.65cm³/g, a BET specific surface area being 800m²/g, and an average granular diameter being 45µm) was added in a beaker, and 27g of deionized water was added thereto. The beaker was placed on a stir mixer to mix the materials in the beaker. During stirring, 0.6g of styrene-butadiene rubber (SBR) aqueous suspension (product of Nangtong Shen Hua Chemical Industrial Company Limited, model No. TAIPOL1500E) with a concentration of 60% was added into said beaker. After stirring for ten minutes, the turbidity of the supernate in the beaker is observed. When the supernate was completely clear, it was shown that the hydrophobic polytetrafluoroethylene is completely absorbed by the carbon black granules. At this stage, the semi-finished product of the hydrophobic conductive porous granules were fabricated. If the supernate in the beaker was still not completely clear, the same process was repeated until the supernate became completely clear.

89g of zinc oxide, 6g of cadmium oxide, and 3 of bismuth oxide were mixed well, and the mixture was added into the above mentioned beaker. 10g of a hydroxypropyl methyl cellulose aqueous solution with a concentration of 3% and 12g of a polyvinyl alcohol aqueous solution with a concentration of 4%were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### Example 4

2.5g of carbon black (product of KETJEN BLACK INTERNATIONAL COMPANY, with a total pore volume being 0.75cm³/g, a BET specific surface area being 1400m²/g, and an average granular diameter being 25µm) was added in a beaker, and 27g of deionized water was added thereto. The beaker was placed on a stir mixer to mix the materials in the beaker. During stirring, 1.25g of a polytetrafluoroethylene aqueous suspension with a concentration of 60% was added into said beaker. After stirring for ten minutes, the turbidity of the supernate in the beaker was observed. When the supernate was completely clear, it was shown that the hydrophobic polytetrafluoroethylene had been completely absorbed by the carbon black granules. At this stage, the semi-finished product of the hydrophobic conductive porous granules was fabricated. If the supernate in the beaker was still not completely clear, the same process was repeated until the supernate became completely clear.

89g of zinc oxide, 4g of cadmium oxide, and 3g of lead oxide were mixed well, and the mixture was added into above mentioned beaker. 10g of a hydroxyethyl cellulose aqueous solution with a concentration of 3% and 12g of a polyvinyl alcohol aqueous solution with a concentration of 4% were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### Example 6

1.5g of carbon black (product of KETJEN BLACK INTERNATIONAL COMPANY, with a total pore volume being 0.55cm³/g, a BET specific surface area being 900m²/g, and an average granular diameter being 45µm) was added in a beaker, and 31 g of deionized water was added thereto. The beaker was placed on a stir mixer to mix the materials in the beaker. During stirring, 0.17g of a polytetrafluoroethylene aqueous suspension with a concentration of 60% was added into said beaker. After stirring for ten minutes, the turbidity of the supernate in the beaker was observed. When the supernate was completely clear, it was shown that the hydrophobic polytetrafluoroethylene had been completely absorbed by the carbon black granules. At this stage, the semi-finished product of the hydrophobic conductive porous granules was fabricated. If the supernate in the beaker was still not completely clear, the same process was repeated until the supernate became completely clear.

91 g of zinc oxide, 3g of cadmium oxide, and 3g of bismuth oxide were mixed well, and the mixture was added into above mentioned beaker. 10g of a hydroxypropyl methyl cellulose aqueous solution with a concentration of 3% and 12g of a polyvinyl alcohol aqueous solution with a concentration of 4% were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### Example 7

0.7g of carbon black (product of Carbon Black Institute of China Rubber Group, with a total pore volume being 0.6cm³/g, a BET specific surface area being 700m²/g, and an average granular diameter being 40µm) was added in a beaker, and 33g of deionized water was added thereto. The beaker was placed on a stir mixer to mix the materials in the beaker. During stirring, 0.25g of a polytetrafluoroethylene aqueous suspension with a concentration of 60% was added into said beaker. After stirring for ten minutes, the turbidity of the supernate in the beaker was observed. When the supernate was completely clear, it was shown that the hydrophobic polytetrafluoroethylene had been completely absorbed by the carbon black granules. At this stage, the semi-finished product of the hydrophobic conductive porous granules was fabricated. If the supernate in the beaker was still not completely clear, the same process was repeated until the supernate became completely clear.

93g of zinc oxide, 2.5g of cadmium oxide, and 2.5g of bismuth oxide were mixed well, and the mixture was added into above mentioned beaker. 10g of a hydroxypropyl methyl cellulose aqueous solution with a concentration of 3% and 12g of a polyvinyl alcohol aqueous solution with a concentration of 4% were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### Example 8

2.0g of carbon black (product of KETJEN BLACK INTERNATIONAL COMPANY, with a total pore volume being 0.5cm³/g, a BET specific surface area being 500m²/g, and an average granular diameter being 25µm) was added in a beaker, and 35g of deionized water was added thereto. The beaker was placed on a stir mixer to mix the materials in the beaker. During stirring, 1.3g of a polytetrafluoroethylene aqueous suspension with a concentration of 60% was added into said beaker. After stirring for ten minutes, the turbidity of the supernate in the beaker was observed. When the supernate was completely clear, it was shown that the hydrophobic polytetrafluoroethylene had been completely absorbed by the carbon black granules. At this stage, the semi-finished product of the hydrophobic conductive porous granules was fabricated. If the supernate in the beaker was still not completely clear, the same process was repeated until the supernate became completely clear.

95g of zinc oxide, 2.5g of cadmium oxide, and 2.5g of bismuth oxide were mixed well, and the mixture was added into the above mentioned beaker. 10g of a hydroxypropyl methyl cellulose aqueous solution with a concentration of 3% and 12g of a polyvinyl alcohol aqueous solution with a concentration of 4% were added and mixed well. 2.5g of a polytetrafluoroethylene aqueous suspension with a concentration of 60% was added and mixed well to obtain a uniform slurry. The prepared slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### Comparative Example 1

89g of zinc oxide, 6g of cadmium oxide, 3g of bismuth oxide, and 1g of carbon black (same as in Example 3) were added in a beaker and mixed well. 10g of a hydroxypropyl methyl cellulose aqueous solution with a concentration of 3%, 12g of a polyvinyl alcohol aqueous solution with a concentration of 4%, and 30g of deionized water were added and mixed well to obtain a uniform slurry. 3.1g of a polytetrafluoroethylene aqueous suspension with a concentration of 60% was added to the uniform slurry and mixed well to obtain a negative electrode slurry. The prepared negative electrode slurry was coated on both sides of a mesh copper belt galvanized with stannum by using a slurry stretching equipment. The copper belt was then dried and press cut to prepare zinc negative electrodes with the dimensions of 99mm×21.5mm.

Using said prepared zinc negative electrode and the same manufacturing method of example 1, a model 2/3AA cylindrical zinc-nickel battery was fabricated.

### [Tests of Battery Properties]

The batteries of Examples 1-8 and Comparative Example 1 were initially charged for 16 hours with 30mA, and then standed for 5 hours. Then, each battery discharged with 60mA to 1.5V, the discharge capacity of each battery was recorded, and each battery was weighed. Each battery was continuously charged for 28 days with 30mA, and the standed for 1-4 hours. Then, each battery discharged with 75mA to 1.5V, the discharge capacity of each battery was recorded, and each battery was weighed. The cycle life of each battery was determined using the cycle life testing method of the IEC standard (IEC60285-1999). The results are listed in Table 1.

As shown in Table 1, in terms of resistance to the long-term overcharging, the weight loss of a battery of this invention was relatively low, or was zero. It was confirmed that the hydrophobic conductive porous granules in the zinc negative electrode of this invention can, to a certain extent, reduce the frequency or completely avoid the opening of the safety valve caused by the excessive internal pressure. The content of the hydrophobic conductive porous granules and the weight ratio of carbon black and the hydrophobic materials (such as polytetrafluoroethylene) in the hydrophobic conductive porous granules affects a battery's initial capacity and cycle life. The battery can achieve the optimal overall properties by selecting parameters within the optimal range.

**Table 1 Properties of Model 2/3AA sealed zinc-nickel battery ( Charged to with 30mA for 28 days, discharged with 75mA to 1.5V)**

| Battery | Weight of Carbon Black (g) | H.M.* | Weight of H.M.* (g) | Battery Capacity (mAh) | Charging Time (d) | Rate of Capacity Preservation (%) | Weight Loss (mg) | Lifespan (cycles) |
|---|---|---|---|---|---|---|---|---|
| Example 1 | 0.2 | PTFE | 0.03 | 362 | 28 | 80.5 | 9 | 450 |
| Example 2 | 0.2 | PTFE | 0.1 | 354 | 28 | 83.3 | 4 | ≥500 |
| Example 3 | 1 | SBR | 0.6 | 334 | 28 | 89.5 | 0 | ≥500 |
| Example 4 | 2.5 | PTFE | 1.25 | 295 | 28 | 89.7 | 0 | ≥500 |
| Example 6 | 1.5 | PTFE | 0.17 | 351 | 28 | 81.3 | 13 | 440 |
| Example 7 | 0.7 | PTFE | 0.25 | 346 | 28 | 85.7 | 0 | ≥500 |
| Example 8 | 2.0 | PTFE | 1.3 | 324 | 28 | 87.5 | 0 | ≥500 |
| Comparative Example 1 | 1 | - | - | 367 | 28 | 78.8 | 27 | 370 |

| | | | | | | | | |
|---|---|---|---|---|---|---|---|---|
| Note: * H.M. represents Hydrophobic Material solution with 60% concentration. | | | | | | | | |

## Claims

1. A zinc negative electrode in a zinc-nickel secondary battery, comprising a current collector and negative electrode materials coated on the current collector, wherein the negative electrode materials contain zinc oxide, a binding agent and hydrophobic conductive porous granules, said hydrophobic conductive porous granules are carbon black on which hydrophobic materials are absorbed, and said hydrophobic conductive porous granules are evenly distributed in the negative electrode materials; and wherein based on the total weight of the negative electrode materials, the content of hydrophobic materials absorbed on carbon black is 0.0182-1% wherein the binding agent is a mixture of a hydrophobic binding agent and a hydrophilic binding agent.

2. The zinc negative electrode of claim 1, wherein based on the total weight of the negative electrode materials, the contents of the ingredients of said negative electrode materials are as follows:
| | |
|---|---|
| zinc oxide: | 86∼95 %; |
| the binding agent: | 1∼8 %: |
| carbon black: | 0.2∼5 %. |

3. The zinc negative electrode of claim 1, wherein the hydrophobic materials absorbed on carbon black are polytetrafluoroethylene and/or styrene-butadiene rubber.

4. The zinc negative electrode of claim 1, wherein said carbon black has a total pore volume of 0.45∼0.80 cm³/g, a BET specific surface area of 200∼1600 m²/g, and an average granular diameter of 25∼50 µm.

5. The zinc negative electrode of claim 1, wherein based on the total weight of the negative electrode materials, the negative electrode materials further contain 1∼12 % a metal oxide additive selected from the group consisting of cadmium oxide, bismuth oxide, indium oxide, lead oxide, stannum dioxide and the mixture thereof.

6. The zinc negative electrode of claim 1, wherein the hydrophobic binding agent being polytetrafluoroethylene and/or styrene-butadiene rubber, and the hydrophilic binding agent being selected from the group consisting of hydroxypropyl methyl cellulose, sodium carboxy methyl cellulose, hydroxyethyl cellulose, polyvinyl alcohol and the mixture thereof.

7. A method for preparing a zinc negative electrode according to claim 1, comprising:
(1) dispersing 0.2∼5 weight parts of carbon black in 25∼35 weight parts of water;
(2) adding an aqueous suspension containing 0.02∼1 weight part of hydrophobic materials into the dispersion prepared in step (1) at stirring to make the hydrophobic materials completely absorbed by the carbon black, to obtain a semi-finished product of the hydrophobic conductive porous granules;
(3) adding 86∼95 weight parts of zinc oxide, and optionally 1∼12 weight parts of metal oxide additive into the semi-finished product of the hydrophobic conductive porous granules prepared in step (2), adding hydrophilic binding agent solution with a dry weight of 0.3∼3 weight parts thereto at stirring, and adding hydrophobic binding agent solution with a dry weight of 0.7∼5 weight parts thereto at stirring to obtain a uniform zinc negative electrode slurry; and
(4) coating the zinc negative electrode slurry on the two sides of the electrode current collector by using a slurry stretching equipment, drying, and press cutting to obtain the zinc negative electrode with desired size,
providing that the total weight of zinc oxide, the binding agent, carbon black, and hydrophobic materials absorbed on carbon black, and optionally metal oxide additive, is 100 weight parts.

8. The method of claim 7, wherein the hydrophobic materials absorbed on carbon black are polytetrafluoroethylene and/or styrene-butadiene rubber.

9. The method of claim 7, wherein said carbon black has a total pore volume of 0.45∼0.80 cm³/g, a BET specific surface area of 200∼1600 m²/g, and an average granular diameter of 25∼50 µm.

10. The method of claim 7, wherein the metal oxide additive is selected from the group consisting of cadmium oxide, bismuth oxide, indium oxide, lead oxide, stannum dioxide and the mixture thereof.

11. The method of claim 7, wherein the hydrophobic binding agent is polytetrafluoroethylene and/or styrene-butadiene rubber, and the hydrophilic binding agent is selected from the group consisting of hydroxypropyl methyl cellulose, sodium carboxy methyl cellulose, hydroxyethyl cellulose, polyvinyl alcohol and the mixture thereof.

12. A zinc-nickel secondary battery, wherein it contains a zinc negative electrode according to any one of claims 1-6.

## Patentansprüche

1. Negative Zinkelektrode in einer Zink-Nickel-Sekundärbatterie, umfassend einen Stromabnehmer und negative Elektrodenmaterialien, welche auf dem Stromabnehmer aufgebracht sind, wobei die Materialien der negativen Elektrode Zinkoxid, ein Bindemittel und hydrophobe leitfähige poröse Granulate umfassen, wobei die hydrophoben leitfähigen porösen Granulate Ruß sind, auf welchem hydrophobe Materialien absorbiert sind, und wobei die hydrophoben leitfähigen porösen Granulate gleichmäßig in den Materialien der negativen Elektrode verteilt sind; und wobei bezogen auf das Gesamtgewicht der Materialien der negativen Elektrode, der Gehalt der auf dem Ruß absorbierten hydrophoben Materialien 0,0182 bis 1% beträgt, wobei das Bindemittel eine Mischung aus einem hydrophoben Bindemittel und einem hydrophilen Bindemittel ist.

2. Negative Zinkelektrode nach Anspruch 1, wobei bezogen auf das Gesamtgewicht der Materialien der negativen Elektrode, die Gehalte der Bestandteile der Materialien der negativen Elektrode wie folgt sind:
| | |
|---|---|
| Zinkoxid: | 86 bis 95%; |
| Bindemittel: | 1 bis 8%; |
| Ruß: | 0,2 bis 5%. |

3. Negative Zinkelektrode nach Anspruch 1, wobei die hydrophoben Materialien, welche auf dem Ruß absorbiert sind, Polytetrafluorethylen und/oder Styrolbutadiengummi sind.

4. Negative Zinkelektrode nach Anspruch 1, wobei der Ruß ein gesamtes Porenvolumen von 0,45 bis 0,80 cm³/g, eine spezifische BET-Oberfläche von 200 bis 1.600 m²/g und einen durchschnittlichen Granulatdurchmesser von 25 bis 50 µm aufweist.

5. Negative Zinkelektrode nach Anspruch 1, wobei bezogen auf das Gesamtgewicht der Materialien der negativen Elektrode, die Materialien der negativen Elektrode des Weiteren 1 bis 12% eines Metalloxidzusatzmittels enthalten, gewählt aus der Gruppe bestehend aus Cadmiumoxid, Bismutoxid, Indiumoxid, Bleioxid, Zinndioxid und deren Mischungen.

6. Negative Zinkelektrode nach Anspruch 1, wobei das hydrophobe Bindemittel Polytetrafluorethylen und/oder Styrolbutadiengummi ist und das hydrophile Bindemittel aus der Gruppe gewählt wird, bestehend aus Hydroxypropylmethylzellulose, Natriumcarboxymethylzellulose, Hydroxyethylzellulose, Polyvinylalkohol und deren Mischungen.

7. Verfahren zur Herstellung einer negativen Zinkelektrode nach Anspruch 1, umfassend:
(1) Dispergieren von 0,2 bis 5 Gewichtsteilen Ruß in 25 bis 35 Gewichtsteilen Wasser;
(2) Zugeben einer wässrigen Suspension enthaltend 0,02 bis 1 Gew.-% hydrophober Materialien in die Dispersion, welche in Schritt (1) hergestellt wurde, unter Rühren, so dass die hydrophoben Materialien vollständig von dem Ruß absorbiert werden, um ein Halbfertigprodukt aus hydrophoben leitfähigen porösen Granulaten zu erhalten;
(3) Zugeben von 86 bis 95 Gewichtsteilen Zinkoxid, und gegebenenfalls 1 bis 12 Gewichtsteilen eines Metalloxidzusatzstoffes in das Halbfertigprodukt aus hydrophoben leitfähigen porösen Granulaten, welche in Schritt (2) hergestellt wurden, Zugeben einer hydrophilen Bindemittellösung mit einem Trockengewicht von 0,3 bis 3 Gewichtsteilen dazu unter Rühren, und Zugeben einer hydrophoben Bindemittellösung mit einem Trockengewicht von 0,7 bis 5 Gewichtsteilen unter Rühren, um eine gleichmäßige Aufschlämmung der negativen Zinkelektrode zu erhalten; und
(4) Aufbringen der Aufschlämmung der negativen Zinkelektrode auf die zwei Seiten des Elektrodenstromabnehmers unter Verwendung einer Aufschlämmungsaufbringvorrichtung, Trocknen und Stanzen, um die negative Zinkelektrode mit der gewünschten Größe zu erhalten,
vorausgesetzt, dass das Gesamtgewicht an Zinkoxid, Bindemittel, Ruß und den auf dem Ruß absorbierten hydrophoben Materialien und gegebenenfalls das Metalioxidzusatzmittel 100 Gewichtsteile beträgt.

8. Verfahren nach Anspruch 7, wobei die hydrophoben Materialien, welche auf dem Ruß absorbiert sind, Polytetrafluorethylen und/oder Styrolbutadiengummi sind.

9. Verfahren nach Anspruch 7, wobei das Ruß ein gesamtes Porenvolumen von 0,45 bis 0,80 cm³/g aufweist, eine spezifische BET-Oberfläche von 200 bis 1.600 m²/g und einen mittleren Granulatdurchmesser von 25 bis 50 µm.

10. Verfahren nach Anspruch 7, wobei das Metalloxidzusatzmittel gewählt ist aus der Gruppe bestehend aus Cadmiumoxid, Bismutoxid, Indiumoxid, Bleioxid, Zinndioxid und deren Mischungen.

11. Verfahren nach Anspruch 7, wobei das hydrophobe Bindemittel Polytetrafluorethylen und/oder Styrolbutadiengummi ist und das hydrophile Bindemittel aus der Gruppe gewählt wird, bestehend aus Hydroxypropylmethylzellulose, Natriumcarboxymethylzellulose, Hydroxyethylzellulose, Polyvinylalkohol und deren Mischungen.

12. Zink-Nickel-Sekundärbatterie, welche eine negative Zinkelektrode gemäß einem der Ansprüche 1 bis 6 enthält.

## Revendications

1. Electrode négative de zinc dans une batterie secondaire, comprenant un collecteur de courant et des matériaux d'électrode négative appliqués en revêtement au zinc-nickel sur le collecteur de courant, dans laquelle les matériaux d'électrode négative contiennent de l'oxyde de zinc, un agent de liaison, et des granulés poreux conducteurs hydrophobes, lesdits granulés poreux conducteurs hydrophobes sont du noir de charbon sur lequel les matériaux hydrophobes sont absorbés, et lesdits granulés poreux conducteurs hydrophobes sont réparties de façon égale dans les matériaux d'électrode négative ; et dans laquelle sur la base du poids total des matériaux d'électrode négative, la teneur des matériaux hydrophobes absorbés sur du noir de charbon est de 0,02 à environ 1 % ; dans laquelle l'agent de liaison est un mélange d'un agent de liaison hydrophobe et d'un agent de liaison hydrophile.

2. Electrode négative de zinc selon la revendication 1, dans laquelle sur la base du poids total des matériaux d'électrode négative, les teneurs des ingrédients desdits matériaux d'électrode négative sont les suivantes :
| | |
|---|---|
| oxyde de zinc : | 86 à environ 95 % ; |
| agent de liaison : | 1 à environ 8 % ; |
| noir de charbon : | 0,2 à environ 5 %. |

3. Electrode négative de zinc selon la revendication 1, dans laquelle les matériaux hydrophobes absorbés sur le noir de charbon sont du polytétrafluoroéthylène et/ou du caoutchouc de styrène-butadiène.

4. Electrode négative de zinc selon la revendication 1, dans laquelle ledit noir de charbon a un volume de pore total de 0,45 à environ 0,80 cm³/g, une aire de surface spécifique BET de 200 à environ 1600 m²/g, et un diamètre de granulé moyen de 25 à environ 50 µm.

5. Electrode négative de zinc selon la revendication 1, dans laquelle sur la base du poids total des matériaux d'électrode négative, les matériaux d'électrode négative contiennent en outre 1 à environ 12 % d'un additif d'oxyde métallique sélectionné dans le groupe comprenant de l'oxyde de cadmium, de l'oxyde de bismuth, de l'oxyde d'indium, de l'oxyde de plomb, du dioxyde d'étain, et le mélange de ceux-ci.

6. Electrode négative de zinc selon la revendication 1, dans laquelle l'agent de liaison hydrophobe est du caoutchouc de polytétrafluoroéthylène et/ou de styrène-butadiène, et l'agent de liaison hydrophile étant sélectionné dans le groupe comprenant de l'hydroxypropylméthylcellulose, de la carboxyméthylcellulose de sodium, de l'hydroxyéthylcellulose, de l'alcool polyvinylique, et le mélange de ceux-ci.

7. Procédé de préparation d'une électrode négative de zinc selon la revendication 1, comprenant :
(1) la dispersion de 0,2 à environ 5 parties en poids de noir de charbon dans 25 à environ 35 parties en poids d'eau ;
(2) l'ajout d'une suspension aqueuse contenant 0,02 à environ 1 partie en poids de matériaux hydrophobes dans la dispersion préparée dans l'étape (1) en agitant pour faire en sorte que les matériaux hydrophobes soient complètement absorbés par le noir de charbon, afin d'obtenir un produit semi-fini constitué des granulés poreux conducteurs hydrophobes ;
(3) l'ajout de 86 à environ 95 parties en poids d'oxyde de zinc, et facultativement de 1 à environ 12 parties en poids d'additif d'oxyde métallique dans le produit semi-fini constitué des granulés poreux conducteurs hydrophobes préparé à l'étape (2), l'ajout à celui-ci de la solution d'agent de liaison hydrophobe avec un poids sec de 0,3 à environ 3 parties en poids lors de l'agitation, et l'ajout à celui-ci de la solution d'agent de liaison hydrophobe avec un poids sec de 0,7 à environ 5 parties en poids lors de l'agitation, afin d'obtenir une pâte d'électrode négative de zinc uniforme ; et
(4) l'application en revêtement de la pâte d'électrode négative de zinc sur les deux côtés du collecteur de courant d'électrode en utilisant un équipement d'étirement de pâte, un séchage et une découpe à la presse afin d'obtenir l'électrode négative de zinc à la taille désirée,
à condition que le poids total de l'oxyde de zinc, de l'agent de liaison, du noir de charbon, et les matériaux hydrophobes absorbés sur du noir de charbon, et facultativement un additif d'oxyde métallique, soit de 100 parties en poids.

8. Procédé selon la revendication 7, dans lequel les matériaux hydrophobes absorbés sur le noir de charbon sont du polytétrafluoroéthylène et/ou du caoutchouc de styrène-butadiène.

9. Procédé selon la revendication 7, dans lequel ledit noir de charbon a un volume de pores total de 0,45 à environ 0,80 cm³/g, une surface spécifique BET de 200 à environ 1600 m²/g, et un diamètre granulaire moyen de 25 à environ 50 µm.

10. Procédé selon la revendication 7, dans lequel l'additif d'oxyde métallique est sélectionné dans le groupe comprenant de l'oxyde de cadmium, de l'oxyde de bismuth, de l'oxyde d'indium, de l'oxyde de plomb, du dioxyde d'étain et, le mélange de ceux-ci.

11. Procédé selon la revendication 7, dans lequel l'agent de liaison hydrophobe est du polytétrafluoroéthylène et/ou du caoutchouc de styrène-butadiène, et l'agent de liaison hydrophile est sélectionné dans le groupe comprenant de l'hydroxy-propylméthylcellulose, de la carboxyméthylcellulose de sodium, de l'hydroxyéthylcellulose, de l'alcool polyvinylique et le mélange de ceux-ci.

12. Batterie secondaire au zinc-nickel, contenant une électrode négative de zinc selon l'une quelconque des revendications 1 à 6.
